# EUROPÄISCHE PATENTSCHRIFT

(11) **EP 1 951 549 B1**
(45) Veröffentlichungstag und Bekanntmachung des Hinweises auf die Patenterteilung: **22.12.2010**
(21) Anmeldenummer: 06807402.0
(22) Anmeldetag: 19.10.2006
(51) Int. Cl.: B60Q 1/08, B60Q 1/52, B60Q 1/12, B60Q 1/18, B60S 1/60, B60S 1/08, F21V 29/00

(54) **SCHEINWERFERMODUL MIT INTEGRIERTEM LICHT-REGENSENSOR**
HEADLIGHT MODULE COMPRISING AN INTEGRATED LIGHT/RAIN SENSOR
MODULE DE PHARE A CAPTEUR DE LUMIERE ET DE PLUIE INTEGRE

(30) Priorität: 18.11.2005 DE 102005055087
(43) Veröffentlichungstag der Anmeldung: 06.08.2008
(73) Patentinhaber: ROBERT BOSCH GMBH, 70442 Stuttgart (DE)
(72) Erfinder: HAUG, Karsten, 70372 Stuttgart (DE)
(86) Internationale Anmeldenummer: PCT/EP2006/067574
(87) Internationale Veröffentlichungsnummer: WO 2007/057274

(56) Entgegenhaltungen:
- EP-A- 1 515 293
- EP-A2- 0 859 188
- WO-A-2005/116522
- WO-A2-03/098915
- DE-A1- 10 255 443
- DE-A1- 19 731 754

## Beschreibung

Die Erfindung betrifft eine Vorrichtung zum Erkennen der Abweichung eines Fahrzeugs von einer Sollfahrbahn. Derartige Vorrichtungen kommen insbesondere im Automobilbereich in Fahrerassistenzsystemen zum Einsatz.

### Stand der Technik

Aus dem Stand der Technik sind eine Mehrzahl von sogenannten "Lane Departure Warning Systems" (LDWS, Spurabweichungs-Warnsysteme) bekannt. Derartige Spurabweichungs-Warnsysteme sind Fahrerassistenzsysteme, welche eine unbeabsichtigte Abweichung eines Kraftfahrzeugs von einer vorgegebenen Spur detektieren und gegebenenfalls den Fahrer warnen. Ein erstes, beispielsweise aus WO2002071363A1 bekanntes LDWS-System verwendet punktförmig messende Infrarotsensoren mit aktiver Beleuchtung, welche üblicherweise einer Frontschürze des Automobils untergebracht sind. Diese Infrarotsensoren mit aktiver Beleuchtung erfassen den Bodenbereich unterhalb der Frontschürze. Bewegt sich das Kraftfahrzeug über Straßenmarkierungen, ohne dass ein Fahrtrichtungsanzeiger betätigt wurde, so wird dies von den Infrarotsensoren erfasst. Dem Fahrer wird entsprechend ein Warnsignal in Form einer Vibration im Fahrersitz übermittelt.

Dieses System ist jedoch für den praktischen Einsatz mit einer Mehrzahl von Nachteilen verbunden. Insbesondere bestehen diese Nachteile darin, dass die Erfassung von Fahrbahnmarkierungen lediglich unterhalb der Frontschürze erfolgt, so dass keine Vorausschau erfolgen kann. Dementsprechend kurz sind die Warnzeiten, innerhalb derer der Fahrer auf den Warnhinweis reagieren kann. Auch werden Richtungswechsel der vorausliegenden Fahrbahn (Kurven) nicht rechtzeitig erkannt. Ein weiterer Nachteil besteht darin, dass die Infrarotsensoren unterhalb der Frontschürze einer verstärkten Verschmutzungsbelastung ausgesetzt sind.

Andere aus dem Stand der Technik bekannte Systeme basieren üblicherweise auf Videokameras mit einer Grauwertbildverarbeitung. Derartige Systeme erfassen mittels einer oder mehrerer Videokameras einen Bereich vor dem sich bewegenden Fahrzeug, wobei Fahrbahnmarkierungen im Kamerabild mittels einer Bildverarbeitungssoftware erkannt werden. Wiederum wird dabei eine unbeabsichtigte Abweichung von der Fahrspur (d.h. wiederum im Falle eines nicht betätigten Fahrtrichtungsanzeigers) detektiert und dem Fahrer ein entsprechendes Warnsignal übermittelt.

Derartige Systeme weisen jedoch für den praktischen Einsatz ebenfalls einige Probleme auf. Ein erstes Problem besteht darin, dass die für diese Systeme verwendeten Kameras üblicherweise möglichst weit oben im Kraftfahrzeug integriert werden, um möglichst dicht vor dem Kraftfahrzeug messen zu können. Üblicherweise werden daher derartige Kameras im Dachbereich untergebracht. Um den Sichtbereich der Kamera frei von Einflüssen durch Regenwasser zu halten, besteht eine Randbedingung darin, die Kamera im Wischerfeld unterzubringen. Diese beiden Randbedingungen der Unterbringung möglichst weit oben und der Unterbringung im Wischerfeld lassen sich jedoch bei vielen Scheibenwischerarten nur schwer vereinbaren (z. B. bei gegenläufigen Butterfield-Wischern), insbesondere da der günstige Einbaubereich in der Nähe des Innenspiegels häufig wegfällt, da er nicht überwischt wird. Weiterhin muss die Kamera möglichst dicht hinter der Frontscheibe eingesetzt werden, da sonst aufgrund des optischen Öffnungswinkels des Objektivs voluminöse Streulichtblenden erforderlich sind, um das Kamerabild vor Streulichteinflüssen zu schützen. Ein weiteres Problem besteht in der Erwärmung derartiger Systeme. Insbesondere der Bereich am oberen Ende der Frontscheibe unterhalb des Kraftfahrzeugdachs ist üblicherweise besonderen Temperaturbelastungen, insbesondere durch Sonnenstrahlung, ausgesetzt. Temperatursenken mit günstigen Temperaturen (zum Beispiel einer Anbindung an die Karosserie, insbesondere im Bodenbereich der Karosse) sind jedoch nicht vorhanden. Damit reduziert sich in der Regel die Verfügbarkeit des Systems bei hohen Umgebungstemperaturen.

Weiterhin wird in vielen Fällen aus Platzgründen die Integration eines Licht-Regensensors in LDW-Systeme gefordert. Ein Regensensor ist jedoch bei den bekannten Kamerasystemen in der Regel nur schwer realisierbar, da üblicherweise der Tiefenschärfebereich der (typischerweise auf Unendlich fokussierten) Kamera nicht ausreicht, um die Scheibenoberfläche scharf abzubilden. Weiterhin werden in den aus dem Stand der Technik bekannten Systemen häufig Kameras mit begrenztem Öffnungswinkel eingesetzt. Dies führt jedoch dazu, dass üblicherweise enge Kurven nur schlecht aufgelöst werden, da diese vom Kameraöffnungswinkel nur unzureichend erfasst werden. Ein weiterer Nachteil besteht darin, dass ein Beschlag der Scheibe, insbesondere der Frontscheibe, die Verfügbarkeit der Kamera reduziert. So wird der Fahrer die Lüftung üblicherweise nur dann aktivieren, wenn sein eigenes Sichtfeld beschlagen ist. Da die Kamera bei Einsatz unterhalb des Daches höher montiert ist, kann jedoch dort das Sichtfeld zumindest partiell beschlagen sein. Auch dies reduziert die Verfügbarkeit des beschriebenen Systems.

EP 1 515 293 A1 offenbart eine Vorrichtung zum Erfassen von Hindernissen wobei zwei in den Scheinwerfern integrierte Kamera auf die Fahrbahn ausgerichtet sind. Diese Vorrichtung ist ausgebildet, um einer Abweichung eines Fahrzeug von einer Soll-Fahrbahn zu Erkennen.

DE 101 31 840 A1 offenbart eine Vorrichtung zur Verbesserung der Sicht in Fahrzeugen. Die Vorrichtung weist einen oder mehrere Laserscheinwerfer auf, deren Wellenlänge außerhalb des sichtbaren Spektrums liegt. Mittels dieser Laserscheinwerfer wird ein vorgegebener Raumwinkelbereich vor dem Fahrzeug ausgeleuchtet. Der Raumwinkelbereich wird mittels einer Kamera, welche in dem Spektralbereich des Laserscheinwerfers sensitiv ist, aufgenommen und mittels einer Anzeigeoptik im Fahrzeug wiedergegeben. Die Laserscheinwerfer und das Kamerasystem sind im Dachbereich des Fahrzeugs untergebracht.

DE 198 22 142 A1 offenbart ein Verfahren und eine Vorrichtung zum Erzeugen eines vor einem Kraftfahrzeug auf die Fahrbahn treffenden Lichtbündels. Die Vorrichtung weist eine Umlenkeinrichtung zur Veränderung der Lichtstärkeverteilung innerhalb des Lichtbündels sowie eine Sensoreinrichtung zum Erfassen der Lichtverhältnisse vor dem Kraftfahrzeug auf. Weiterhin ist eine Verarbeitungseinrichtung vorgesehen, die mit der Umlenkeinrichtung und mit der Sensoreinrichtung gekoppelt ist und mit der die Lichtstärkeverteilung innerhalb des Lichtbündels in Abhängigkeit von den Lichtverhältnisses vor dem Kraftfahrzeug steuerbar und/oder regelbar ist. Dabei wird ein Scheinwerfer eingesetzt, welcher eine Glühlampe aufweist. In dem Scheinwerfer ist ein CCD-Chip untergebracht, welcher derart angeordnet und ausgerichtet ist, dass mit diesem die Lichtverhältnisse weit vor dem Kraftfahrzeug erfasst werden können. Es sollen insbesondere Lichtbündel, die von einem entgegenkommenden Fahrzeug ausgesandt werden, erfasst werden. Die Kamera ist also näherungsweise waagrecht ausgerichtet und weist einen kleinen Öffnungswinkel (z.B. 20° horizontal) auf, um auch weit entfernte Scheinwerfer (z.B. in 100 m) noch ausreichend auflösen zu können. Der Tiefenschärfebereich solcher Kameras bewegt sich typischerweise zwischen 2m und unendlich. Beispielsweise kann die mindestens eine Kamera mindestens eine Matrixkamera und/oder mindestens eine Zeilenkamera aufweisen. Mittels einer Umlenkeinrichtung (digitaler Mikrospiegel) wird die Lichtintensität in dem vom Scheinwerfer erzeugten und abgestrahlten Lichtbündel entsprechend eingestellt.

EP 1 457 384 A1 offenbart ein Mehrzweck-Fahrerassistenzsystem für Kraftfahrzeuge mittels eines stereoskopischen Kamerasystems. Das System weist mindestens zwei am Kraftfahrzeug angeordnete Kameraelemente auf, die mit einer zur Früherkennung von Unfallsituationen geeigneten Auswerteeinheit koppelbar sind. Die Kameraelemente bilden Sensoren für Parkhilfesysteme und/oder Abstandsregelsysteme und/oder Spurabweichungswarnsysteme des Kraftfahrzeugs. Das stereoskopische Kamerasystem wird für die Nachführung der Scheinwerfer abhängig vom Spurverlauf benutzt.

Im Gegensatz zum Stand der Technik offenbaren die DE 198 22 142 A1 und EP 1 457 384 A1 also Systeme, bei welchen Kameras oder Bildsensoren in einem Scheinwerfermodul eingesetzt werden. Bei der DE 198 22 142 A1 ist jedoch die Kamera derart ausgerichtet, dass mit dieser die Lichtverhältnisse weit vor dem Kraftfahrzeug erfasst werden können. Die Ausrichtung der Kamera erfolgt also nicht in Richtung Straße und nicht in Richtung eines Nahbereichs, wie es für eine Spurüberwachungsfunktion benötigt würde, sondern im Wesentlichen waagerecht nach vorne und in große Entfernung, um entgegenkommende Scheinwerfer anderer Fahrzeuge zu erfassen. Die in EP 1 457 384 A1 offenbarte Vorrichtung weist hingegen den Nachteil auf, dass Sensorik (Stereo-Kamera) und Aktorik (Schwenkeinheit im Scheinwerfer) räumlich weit voneinander entfernt sind und daher zunächst kein eigenes System bilden. Scheinwerfer und Stereokamera müssen in ihrer Charakteristik aufeinander abgestimmt werden, datenmäßig verbunden werden und im Automobilwerk aufeinander justiert werden, was aufwendige Kommunikationsmittel, Prüfstände und entsprechend geschultes Personal erfordert.

### Offenbarung der Erfindung

Es wird daher eine Vorrichtung zum Erkennen der Abweichung eines Fahrzeugs von einer Sollfahrbahn offenbart, welche die Nachteile der aus dem Stand der Technik bekannten Vorrichtungen vermeidet. Insbesondere soll die Vorrichtung zur Abweichungserkennung im Nahbereich (d. h. direkt vor dem Fahrzeug) geeignet sein. Die Vorrichtung weist mindestens ein Scheinwerfermodul auf, in welches mindestens eine Halbleiterlichtquelle zur Beleuchtung eines Fahrbahnbereichs mit sichtbarem und/oder nah-infrarotem Licht integriert ist. Diese Halbleiterlichtquelle kann beispielsweise eine oder mehrere Leuchtdioden oder Laserdioden, insbesondere in einer Matrixanordnung, sowie gegebenenfalls ein entsprechendes Reflektorensystem aufweisen. Diese mindestens eine Halbleiterlichtquelle ersetzt die üblicherweise in Scheinwerfern eingesetzte Glühlampe. Zur Kühlung der Halbleiterlichtquelle ist mindestens ein Kühlelement vorgesehen, beispielsweise ein Kupferblock, ein Wärmetauscher oder andere dem Fachmann bekannte Kühlelemente. Das Kühlelement sollte Temperaturen von < 45°C garantieren.

Weiterhin ist in das mindestens eine Scheinwerfermodul mindestens eine den von der mindestens einen Haltleiterlichtquelle beleuchteten Fahrbahnbereich zumindest teilweise erfassende Kamera integriert, welche ein Kamerabild aufnimmt. Bei dieser Kamera kann es sich beispielsweise wiederum um eine Videokamera mit einem CCD- oder CMOS-Chip oder einem anderen bildsensitiven Element handeln. Weiterhin weist die Kamera üblicherweise eine entsprechende bildgebende Optik auf. Optische Auslegung und Ausrichtung der Kamera sind dabei vorzugsweise so gewählt, dass Fahrbahnbereiche erfasst werden können, die deutlich näher am Fahrzeug liegen als es bei einer Montage der Kamera im Dachbereich möglich ist. Die Kamera ist mit dem mindestens einen Kühlelement, welches bereits die Halbleiterlichtquelle kühlt, thermisch gekoppelt. Dadurch wird die Wärmebelastung der Kamera, gegenüber einer Anbringung hinter der Windschutzscheibe im Dachbereich mit Temperaturen von >90°C signifikant verringert, wodurch die Verfügbarkeit des Systems stark erhöht wird.

Weiterhin weist die Vorrichtung mindestens eine elektronische Auswertungsvorrichtung zur Auswertung der Kamerabilder und zum Erkennen der Abweichung des Fahrzeugs von einer Sollfahrbahn auf, welche beispielsweise durch Fahrbahnmarkierungen vorgegeben ist. Dabei kann es sich beispielsweise um elektronische Auswertungsvorrichtungen handeln, welche Fahrbahnmarkierungen mittels eines Bilderkennungsalgorithmus detektieren. Aus diesen Fahrbahnmarkierungen kann dann auf eine Sollfahrbahn geschlossen werden, wobei bei Abweichung von dieser Sollfahrbahn wiederum eine Warnung an einen Fahrer übermittelt wird.

Die erfindungsgemäße Vorrichtung kann weiterhin dadurch vorteilhaft weitergebildet werden, dass zusätzlich mindestens eine Kurvenlichtvorrichtung integriert wird. Diese mindestens eine Kurvenlichtvorrichtung ist derart ausgestaltet, dass diese eine Schwenkbewegung der Haltleiterlichtquelle, welche zur Beleuchtung des Fahrbahnbereichs eingesetzt wird, entsprechend einer Veränderung der Bewegungsrichtung des Fahrzeugs steuert. Derartige Kurvenlichtvorrichtungen sind aus dem Stand der Technik bekannt. Erfindungsgemäß ist die Kurvenlichtvornchtung jedoch so ausgestaltet, dass die mindestens eine Kamera, welche in das mindestens eine Scheinwerfermodul integriert ist, schwenkbar mit der Halbleiterlichtquelle gekoppelt ist. Dementsprechend kann der Sichtbereich der Kamera, innerhalb dessen ein Kamerabild aufgenommen wird, dem durch die mindestens eine Halbleiterlichtquelle beleuchteten Fahrbahnbereich folgen. Optimalerweise erfolgt die Kopplung zwischen Kamera und Halbleiterlichtquelle dabei unmittelbar im Scheinwerfermodul selbst und/oder direkt durch die in das Scheinwerfermodul integrierte mindestens eine Kamera. Dies sorgt für kurze Kommunikationswege und gewährleistet eine gute informationstechnische Kapselung, da alle Information lokal vorhanden ist und nicht erst beispielsweise an eine zentrale Auswertungseinheit weitergegeben werden muss. Zusätzlich oder alternativ kann jedoch auch eine externe Steuerung und Kopplung eingesetzt werden.

Diese Kopplung kann insbesondere dergestalt erfolgen, dass die Ausrichtung der Halbleiterlichtquelle entsprechend der Informationen, welche die Auswertung des Kamerabildes liefert, gesteuert wird. So kann die Kurvenlichtvorrichtung durch die mindestens eine elektronische Auswertungsvorrichtung an die von der elektronischen Auswertungsvorrichtung erkannte Sollfahrbahn angepasst werden. Die von der mindestens einen elektronischen Auswertungsvorrichtung erkannte Sollfahrbahn wird somit, gegebenenfalls zusätzlich zu anderen Informationen (wie zum Beispiel Lenksignalen) bei dieser Weiterbildung der Erfindung zur Steuerung des Kurvenlichts herangezogen.

Eine weitere vorteilhafte Ausgestaltung der Erfindung betrifft die Integration eines Regensensors. So kann das Scheinwerfermodul eine transparente Abdeckung, beispielsweise ein Deckglas, aufweisen. Dabei soll die mindestens eine Kamera derart im Scheinwerfermodul integriert sein, dass diese transparente Abdeckung im Tiefenschärfebereich der mindestens einen Kamera liegt. Weiterhin ist mindestens eine Regenerkennungsvorrichtung vorgesehen, welche Flüssigkeitstropfen oder -spuren auf der transparenten Abdeckung durch Auswertung des Kamerabildes erkennt. Diese Regenerkennungsvornchtung kann beispielsweise genutzt werden, um die Scheibenwischer der Windschutzscheibe zu aktivieren oder um evtl. elektronische Einstellungen des Kraftfahrzeugs an die veränderte Fahrbahnsituation anzupassen. Weiterhin kann, insbesondere im Falle einer Erkennung von Feuchtigkeit durch das vorgenannte Regenerkennungssystem, eine entsprechende Reinigung der transparenten Abdeckung in Gang gesetzt werden. So kann beispielsweise das Scheinwerfermodul bei Erkennung von Verschmutzungen durch Spritzdüsen oder Wischerblätter gereinigt werden. Alternativ kann erfindungsgemäß die transparente Abdeckung des Scheinwerfermoduls derart ausgestaltet sein, dass diese zum Abschleudern von Flüssigkeit in Drehung versetzt wird. Derartige Vorrichtungen sind beispielsweise aus der Schifffahrt bekannt. Zum Zwecke der Rotation der transparenten Abdeckung kann zum Beispiel ein Elektromotor eingesetzt werden.

Eine weitere vorteilhafte Ausgestaltung der Vorrichtung besteht darin, in das Scheinwerfermodul zusätzlich mindestens eine zusätzliche Lichtquelle zu integrieren, welche mindestens einen Kamerasichtbereich der mindestens einen Kamera ganz oder teilweise ausleuchtet. Insbesondere kann es sich bei dieser mindestens einen zusätzlichen Lichtquelle um eine Halbleiterlichtquelle handeln, und die mindestens eine zusätzliche Lichtquelle emittiert vorzugsweise im infraroten Spektralbereich, insbesondere im nahen infraroten Spektralbereich. Auf diese Weise kann der Kamerasichtbereich auch Bereiche vor dem Fahrzeug erfassen, welche durch die mindestens eine Halbleiterlichtquelle nur schlecht oder gar nicht ausgeleuchtet werden. Somit kann beispielsweise der Kamerasichtbereich auch weitwinkliger sein als der von der Halbleiterlichtquelle ausgeleuchtete Bereich. So können auch Fahrbahnmarkierungen näher am Fahrzeug erfasst werden. Bei der zusätzlichen Lichtquelle kann es sich beispielsweise wiederum um infrarote Leuchtdioden und/oder infrarote Laserdioden handeln. Um andere Verkehrsteilnehmer vor der Emission dieser zusätzlichen Lichtquelle zu schützen, kann die mindestens eine zusätzliche Lichtquelle beispielsweise derart ausgestaltet sein, dass die Intensität und/oder die Ausrichtung der mindestens einen zusätzlichen Lichtquelle in Abhängigkeit von der Geschwindigkeit des Fahrzeugs stufenweise oder kontinuierlich einstellbar ist. Beispielsweise kann die mindestens eine zusätzliche Lichtquelle erst ab einer vorgegebenen Mindestgeschwindigkeit eingeschaltet werden, beispielsweise erst ab einer Geschwindigkeit von 15 km/h.

Eine weitere Weiterbildung der Erfindung besteht darin, dass die Vorrichtung mindestens zwei der oben beschriebenen Scheinwerfermodule aufweist. In diesem Fall können die beiden Scheinwerfermodule mit den jeweiligen Kameras zusätzlich zur Fahrbahnerkennung für eine stereoskopische Objekterkennung im Fahrbahnbereich herangezogen werden. Zu diesem Zweck weist die Vorrichtung zusätzlich ein Anfahrabsicherungssystem auf, welches ausgestaltet ist, um, beispielsweise wiederum mittels Bilderkennungsalgorithmen, Objekte im Fahrbahnbereich zu erkennen und entsprechende Maßnahmen einzuleiten. Derartige Maßnahmen können beispielsweise wiederum in einer Warnung an den Fahrer bestehen, oder es können entsprechende elektronische Schritte eingeleitet werden, z.B. die Freigabe oder Blockierung eines Anfahrbefehls im Rahmen einer ACC-Stop-and-Go-Funktion.

Die beschriebene Vorrichtung gemäß einem der oben beschriebenen Ausführungsbeispiele weist gegenüber den aus dem Stand der Technik bekannten Vorrichtungen zahlreiche Vorteile auf. So wird zum einen die mindestens eine Kamera im Scheinwerfermodul untergebracht, wobei das Scheinwerfermodul mit einer Halbleiterlichtquelle arbeitet. Abgesehen davon, dass die Halbleiterlichtquelle ohnehin eine geringere Wärmeentwicklung aufweist, wird die Kamera thermisch zusätzlich dadurch entlastet, dass diese oder beispielsweise ein wärmeempfindlicher Bestandteil der Kamera (zum Beispiel ein Imager-Chip) an das Kühlelement der Halbleiterlichtquelle angekoppelt wird. Da sowohl die Halbleiterlichtquelle als auch typische Kamera-Chips üblicherweise eine Arbeitstemperatur von < ca. 40 °C benötigen, ergibt sich hieraus eine nahezu 100%ige Verfügbarkeit der Vorrichtung ohne Zusatzaufwand für die Kamerakühlung. Durch die Konstanthaltung der Temperatur kann evtl. eine aufwendige temperaturabhängige Fixed-Pattern-Noise-Korrektur bei CMOS-Kameras entfallen.

Weiterhin wird durch die Unterbringung im Kameramodul auf der Scheinwerferinnenseite ein Beschlag durch Feuchtigkeit ausgeschlossen, da das Scheinwerfermodul üblicherweise ein hermetisch geschlossenes Gehäuse aufweist. Weiterhin sind die Scheinwerfermodule in üblichen Kraftfahrzeugen vergleichsweise tief angeordnet, so dass die Kameras bei dem vorgeschlagenen System dichter über der Straße und somit näher an den Fahrbahnmarkierungen positioniert sind als bei der konventionellen hohen Position im Dachbereich nahe des Innenspiegels (d.h. weit weg von der Straße).. Daraus ergibt sich der Vorteil, dass die Fahrbahnmarkierungen insbesondere bei schlechtem Wetter besser aufgelöst werden als bei einer Unterbringung der Kamerasysteme an der Windschutzscheibe. Somit ist auch eine geringere Auflösung (Pixelanzahl) und eine billigere Optik für die Kamera einsetzbar, da überwiegend Objekte im näheren Bereich erkannt werden müssen.

Vorteilhaft für die Realisierung des Regensensors ist die Bautiefe der Scheinwerfermodule zusammen mit der weitwinkligen optischen Auslegung der Kamera mit einem Tiefenschärfebereich von beispielsweise 20cm bis 10m. Gegenüber der konventionellen Auslegung der Kamera mit einem Tiefenschärfebereich von 2m bis unendlich liegt das von Regentropfen benetzte Scheinwerferglas damit im Tiefenschärfebereich der Kamera.

Ein besonderer Vorteil ergibt sich auch bei Verwendung der mindestens einen zusätzlichen Lichtquelle. Zwar wird bereits durch die Unterbringung der Kamera im Scheinwerfermodul die Abstimmung zwischen Ausleuchtung und Kamerasichtbereich stark verbessert. Durch Verwendung der zusätzlichen Lichtquelle kann die Fahrbahnmarkierung hingegen weiterhin gezielt ausgeleuchtet werden, was insbesondere bei Nacht eine bessere Effizienz der erfindungsgemäßen Vorrichtung bewirkt. Auch die zusätzliche Lichtquelle kann beispielsweise an das mindestens eine Kühlelement thermisch gekoppelt sein. Wenn im Gegensatz zur im sichtbaren Spektralbereich emittierenden Halbleiterlichtquelle für die zusätzliche Lichtquelle ein Infrarot-Emitter eingesetzt wird, so hat dies eine Reihe zusätzlicher Vorteile. Ein Vorteil besteht insbesondere darin, dass der Fahrer des Fahrzeugs die Lichtemission der zusätzlichen Lichtquelle nicht oder nur geringfügig wahrnimmt, wodurch eine Ablenkung des Fahrers vermieden wird. Weiterhin sind viele Bildsensoren im infraroten Spektralbereich, insbesondere im nahen infraroten Spektralbereich, besonders effizient.

### Zeichnung

Anhand der Zeichnung wird die Erfindung nachstehend näher erläutert.

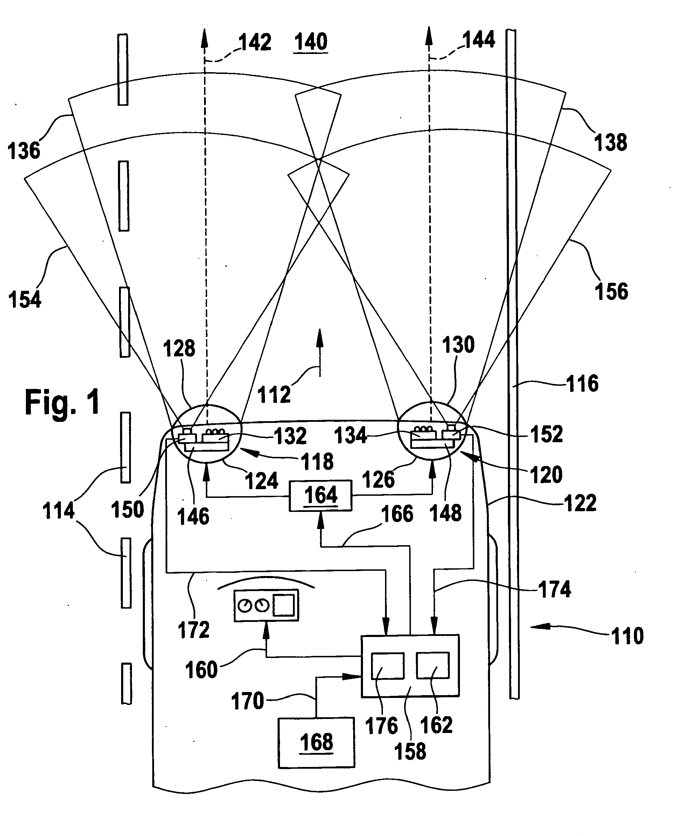

Die einzige Figur (Figur 1) zeigt ein bevorzugtes Ausführungsbeispiel einer erfindungsgemäßen Vorrichtung zum Erkennen der Abweichung eines Fahrzeugs von einer Sollfahrbahn.

In Figur 1 ist zunächst symbolisch ein Fahrzeug 110, in diesem Fall ein Kraftfahrzeug, dargestellt, welches sich in einer Bewegungsrichtung 112 auf einer Sollfahrbahn bewegt. Die Sollfahrbahn wird in diesem Ausführungsbeispiel bestimmt durch eine zwischen zwei Fahrbahnmarkierungen 114, 116 befindliche Fahrbahn. Das Fahrzeug 110 umfasst zwei Scheinwerfermodule 118, 120, welche in eine Karosserie 122 des Fahrzeugs 110 eingelassen sind. Die Scheinwerfermodule 118, 120 umfassen im Wesentlichen hermetisch gegen Feuchtigkeit abgedichtete Scheinwerfergehäuse 124, 126 mit jeweils einer transparenten Abdeckung 128, 130. Dabei ist in diesem einfachen Ausführungsbeispiel das Scheinwerfergehäuse 124, 126 jeweils einstückig und mit einer einzelnen Innenkammer ausgestaltet. Alternativ kann das Scheinwerfergehäuse 124, 126 auch in mehrere Kammern unterteilt sein, wobei die einzelnen im Folgenden erläuterten Elemente z. B. jeweils in separaten Kammern untergebracht sind. Entsprechend ist auch die transparente Abdeckung 128, 130 hier als einzelnes Deckglas ausgestaltet, wobei wiederum jedoch auch eine unterteilte Ausgestaltung möglich ist.

In den Scheinwerfergehäusen 124, 126 sind jeweils Halbleiterlichtquellen 132, 134 angeordnet. Diese Halbleiterlichtquellen 132, 134 sind hier symbolisch als Leuchtdioden-Module ausgestaltet. Die Halbleiterlichtquellen 132, 134 können jedoch zusätzlich oder alternativ auch Laserlichtquellen umfassen. Weiterhin können die Halbleiterlichtquellen 132, 134 Reflektoren umfassen, um das abgestrahlte Licht der Halbleiterlichtquellen 132, 134, insbesondere der Leuchtdioden oder Laserdioden, zu bündeln. Die Halbleiterlichtquellen 132, 134 emittieren Lichtkegel 136 bzw. 138, welche in Figur 1 symbolisch dargestellt sind und welche eine Fahrbahn 140 vor dem Fahrzeug 110 teilweise ausleuchten. In diesem einfachen Ausfuhrungsbeispiel sind die Lichtkegel 136, 138 beziehungsweise deren Abstrahlrichtungen 142, 144 bei einer Geradeausfahrt des Fahrzeugs 110 im Wesentlichen parallel zur Bewegungsrichtung 112. Alternativ sind jedoch auch andere Ausgestaltungen möglich, beispielsweise eine winklige Anordnung der Abstrahlrichtung 142, 144 zur Bewegungsrichtung 112. Auch ist eine ungleiche Ausgestaltung der Lichtkegel 136, 138 möglich und in der Praxis sinnvoll, beispielsweise indem der Lichtkegel 136 auf der Fahrerseite eine längere Ausdehnung in Bewegungsrichtung 112 aufweist als der Lichtkegel 138 auf der Beifahrerseite.

Die Halbleiterlichtquellen 132, 134 werden durch in den Scheinwerfergehäusen 124, 126 angeordnete Kühlelemente 146, 148 gekühlt. Bei diesen Kühlelementen kann es sich beispielsweise um Kupferblöcke, Aluminiumblöcke mit großer Oberfläche und/oder auch um aktiv (z. B. mit einem flüssigen Kühlmittel) gekühlte Kühlelemente 146, 148 handeln, deren jeweilige Ausgestaltung dem Fachmann bekannt ist. Auch kann eine aktive Kühlung vorgesehen sein, beispielsweise eine Kühlung mit einer Temperaturregelung, beispielsweise mittels eines oder mehrerer Pelletier-Elemente. Auf diese Weise kann die Arbeitstemperatur in der Nähe der Halbleiterlichtquellen 132, 134 mittels der Kühlelemente 146, 148 beispielsweise auf einer konstanten Temperatur von ≤40 °C gehalten werden. Eine elektronische Ansteuerung der Kühlelemente 146, 148 und der Halbleiterlichtquellen 132, 134 ist in der Darstellung gemäß Figur 1 nicht abgebildet.

Weiterhin weist die Vorrichtung gemäß Figur 1 in den Scheinwerfermodulen 118, 120 jeweils eine Kamera 150, 152 auf. Diese Kameras 150, 152 umfassen eine Bildgebungsoptik und ein bildsensitives Element in Form eines CCD-Chips (Imagers). Dabei kann der CCD-Chip als Zeilen- oder Matrix-Chip ausgestaltet sein. Die Bildgebungsoptik der Kameras 150, 152 ist jeweils so ausgestaltet, dass die Kameras 150, 152 Kamerasichtbereiche 154, 156 erfassen, welche in Figur 1 symbolisch dargestellt sind. Dabei sind in dieser vereinfachten Darstellung gemäß Figur 1 die Kamerasichtbereiche 154, 156 wiederum näherungsweise symmetrisch zur Bewegungsrichtung 112 des Fahrzeugs 110. Alternativ können die Kameras 150, 152 jedoch auch von der Bewegungsrichtung 112 weg verkippt sein, so dass der Kamerasichtbereich 154 der linken Kamera 150 der linken Fahrbahnmarkierung 114 und der Kamerasichtbereich 156 der rechten Kamera 152 der rechten Fahrbahnmarkierung 116 hin zugewandt ist.

Insbesondere in letzterem Fall, also wenn nicht der vollständige Kamerasichtbereich 154, 156 durch den jeweiligen Lichtkegel 136 beziehungsweise 138 ausgeleuchtet wird, ist es von Vorteil, jeweils eine zusätzliche Lichtquelle in den Scheinwerfermodulen 118, 120 anzuordnen, welche jedoch in Figur 1 nicht dargestellt sind. Diese zusätzlichen Lichtquellen, bei welchen es sich beispielsweise wiederum um Halbleiterlichtquellen handeln kann, können dem maximalen Empfindlichkeitsbereich der Kameras 150, 152 angepasst sein (zum Beispiel insbesondere durch Emission von Infrarotlicht) und können speziell auf die Kamerasichtbereiche 154, 156 abgestimmt sein.

Die Kameras 150, 152 sind thermisch an die Kühlelemente 146, 148 angekoppelt, was in Figur 1 jeweils symbolisch dargestellt ist. Dabei können die Kühlelemente 146, 148, welche hier als einfache Plattenelemente dargestellt sind, selbstverständlich auch einen komplexeren Aufbau aufweisen, beispielsweise eine Erstreckung durch mehrere Kammern der Scheinwerfermodule 118, 120. Wie oben beschrieben, kann es sich bei den Kühlelementen 146, 148 auch um aktiv geregelte Kühlelemente handeln. Dadurch ist insgesamt sichergestellt, dass die Kameras 150, 152 üblicherweise die gleiche Betriebstemperatur aufweisen wie die Halbleiterlichtquellen 132, 134.

Die Kameras 150, 152 sind elektronisch verbunden mit einer elektronischen Auswertungsvorrichtung 158. Dabei ist in der vereinfachten Darstellung gemäß Figur 1 eine einzelne, zentrale elektronische Auswertungsvorrichtung 158 dargestellt. Alternativ kann die elektronische Auswertungsvorrichtung 158 jedoch auch dezentralisiert aufgebaut sein, indem beispielsweise einzelne Komponenten oder die komplette Auswertungsvorrichtung 158 in den Scheinwerfermodulen 118, 120 untergebracht sind. Die Kameras 150, 152 nehmen Kamerabilder auf, welche an die elektronische Auswertungsvorrichtung 158 geliefert werden. In der elektronischen Auswertungsvorrichtung 158 (beziehungsweise in den einzelnen Modulen dieser elektronischen Auswertungsvorrichtung 158) werden diese Kamerabilder entsprechend verarbeitet. Diese Verarbeitung umfasst einerseits eine Bilderkennung der Fahrbahnmarkierungen 114 beziehungsweise 116. Auf diese Weise wird in der elektronischen Auswertungsvorrichtung 158 die Sollfahrbahn berechnet und Abweichungen des Fahrzeugs 110 von dieser Sollfahrbahn werden (beispielsweise durch ein akustisches, optisches und/oder haptisches Warnsignal) an den Fahrer weitergegeben, was in Figur 1 symbolisch durch Bezugszeichen 160 dargestellt ist.

Weiterhin weist die elektronische Auswertungsvorrichtung 158 in Figur 1 ein Anfahrabsicherungssystem 162 auf. Dieses Anfahrabsicherungssystem 162 nutzt gleichzeitig die Signale beider Kameras 150, 152 und wertet beide Kamerabilder kontinuierlich aus. Dabei wird eine stereoskopische Objekterkennung im Bereich der Fahrbahn 140 durchgeführt, also insbesondere in einem Bereich der Fahrbahn 140, welcher von beiden Kamerasichtbereichen 154, 156 erfasst wird. Auf diese Weise können mittels einer Objekterkennungssoftware in den Kamerabildern Objekte erkannt werden, wobei aus einem Vergleich der Positionen der erkannten Objekte in den einzelnen Kamerabildern über eine stereoskopische Berechnung unter Berücksichtigung der Positionierung der Kameras 150, 152 auch eine Berechnung der Position der Objekte erfolgen kann. Auf diese Weise kann beispielsweise der Abstand der Objekte vom Fahrzeug 110 berechnet werden. Entsprechend kann wiederum bei einem zu geringen Abstand (beispielsweise zu einem vorausfahrenden Fahrzeug) und/oder bei einem sich rasch dem Fahrzeug 110 nähernden Objekt (z.B. auch einem Fußgänger ein Warnsignal 160 an einen Fahrer des Fahrzeugs 110 weitergegeben werden oder die Go-Freigabe eines ACC-Stop-and-Go-Systems blockiert werden.

Weiterhin weist die Vorrichtung gemäß Figur 1 eine Kurvenlichtvornchtung 164 auf. Diese Kurvenlichtvorrichtung 164 ist hier ebenfalls wiederum vereinfacht als zentrales Modul dargestellt, kann jedoch auch, wie auch die elektronische Auswertungsvorrichtung 158, dezentralisiert aufgebaut sein. Beispielsweise können separate Module der Kurvenlichtvorrichtung 164 in jedem der Scheinwerfermodule 118, 120 vorgesehen sein. Die Kurvenlichtvorrichtung 164 steuert primär die Abstrahlrichtungen 142, 144 der Lichtkegel 136, 138. Zu diesem Zweck werden die gesamten Scheinwerfermodule 118, 120 oder, vorzugsweise, lediglich die Ausrichtungen der Halbleiterlichtquellen 132, 134 beziehungsweise entsprechend zugeordneter Reflektoren geschwenkt. Dementsprechend sind in den Scheinwerfermodulen 118, 120 entsprechende mechanische und/oder elektrische Vorrichtung zur Ausrichtung der Scheinwerfermodule 118, 120 beziehungsweise der Halbleiterlichtquellen 132, 134 vorgesehen. Dabei sind die Scheinwerfermodule 118, 120 derart ausgestaltet, dass die Kameras 150, 152 mechanisch oder über synchronisierte Antriebe mit den Schwenkvorrichtungen gekoppelt sind. Dementsprechend werden die Kameras 150, 152 beziehungsweise deren Kamerasichtbereiche 154, 156 entsprechend mit der Abstrahlrichtung 142, 144 der Lichtkegel 136, 138 mitgeschwenkt. Dieses Mitschwenken kann ganz oder teilweise erfolgen.

Zur Steuerung der Kurvenlichtvorrichtung 164 werden verschiedene Signale verwendet. Beispielsweise wird die Kurvenlichtvorrichtung 164 durch ein Steuersignal 166 von der elektronischen Auswertungsvorrichtung 158 gesteuert. In dieses Steuersignal 166 können beispielsweise Informationen einer Motorsteuerung 168 (welche zum Beispiel die elektronische Auswertungsvorrichtung 158 ganz oder teilweise umfassen kann) verwendet, beispielsweise Informationen über ein Lenksignal. Das Signal der Motorsteuerung 168 ist in Figur 1 symbolisch mit 170 bezeichnet. Weiterhin werden jedoch für das Steuersignal 166 der Kurvenlichtvorrichtung 164 auch die Kamerasignale 172, 174 berücksichtigt. Da die elektronische Auswertungsvorrichtung 158 aus den Kamerasignalen 172, 174, wie oben beschrieben, eine Sollfahrbahn berechnet, kann die Kurvenlichtvorrichtung 164 beziehungsweise die Abstrahlrichtung 142, 144 der Lichtkegel 136, 138 unmittelbar an diese Sollfahrbahn angepasst sein. Somit wird die Ausrichtung der Halbleiterlichtquellen 132, 134 und der Lichtkegel 136, 138 unmittelbar durch die Informationen der Kameras 150, 152 gesteuert. Ist die Kurvenlichtvorrichtung 164 dezentral aufgebaut, so kann dies insbesondere unter Ausnutzung kurzer Informationswege erfolgen, wobei beispielsweise sämtliche Informationen, die zur Steuerung des Kurvenlichts erforderlich sind, innerhalb der Scheinwerfermodule 118, 120 verbleiben. Die Auswertungsvorrichtung 158 und die Kurvenlichtvorrichtung 164 können komplett in einen Scheinwerfer integriert sein.

Die Scheinwerfermodule 118, 120 weisen, wie oben beschrieben, transparente Abdeckungen 128, 130 auf. Dabei sind in diesem Ausführungsbeispiel gemäß Figur 1 die Kameras 150, 152 derart in den Scheinwerfergehäusen 124, 126 angeordnet, dass die Beabstandung von den transparenten Abdeckungen 128, 130 vergleichsweise hoch ist. Weiterhin sind die Bildgebungsoptiken der Kameras 150, 152 derart ausgestaltet, dass die transparenten Abdeckungen 128, 130 im Tiefenschärfebereich der Kameras 150, 152 liegen. Die elektronische Auswertungsvorrichtung 158 weist weiterhin eine Regenerkennungsvorrichtung 176 auf, welche ebenfalls die Signale 172, 174 der Kameras 150, 152 auswertet. Diese Regenerkennungsvorrichtung 176 umfasst wiederum eine Bilderkennungssoftware, welche (zum Beispiel durch Erkennung einzelner Regentropfen oder Erkennung von durch Regentropfen bedingten Schärfeminderungen oder "Verschmierungen") Regentropfen auf den transparenten Abdeckungen 128, 130 detektiert. Alternativ oder zusätzlich können auch andere Verunreinigungen auf den transparenten Abdeckungen 128, 130 durch die Regenerkennungsvorrichtung 176 detektiert werden. Entsprechend des Ergebnisses dieser Detektion werden geeignete Gegenmaßnahmen eingeleitet. Beispielsweise kann bei Erkennung von Regen eine automatische Betätigung von Wischvorrichtungen der Windschutzscheibe und auf den transparenten Abdeckungen 128, 130, gegebenenfalls unterstützt durch entsprechende Spritzvorrichtungen, erfolgen. Vorzugsweise sind die transparenten Abdeckungen 128, 130 auf den Scheinwerfermodulen 118, 120 drehbar montiert und mit einem oder mehreren Elektromotoren verbunden (in Figur 1 nicht dargestellt). Auf diese Weise kann beispielsweise auch bei Erkennung von Regen durch die Regenerkennungsvornchtung 176 die transparenten Abdeckungen 128, 130 in schnelle Rotation versetzt werden, wodurch Regentropfen von den transparenten Abdeckungen 128, 130 abgeschleudert werden, so dass die Kameras für LDW/LKS weiterhin gute Sicht aufweisen.

## Patentansprüche

1. Vorrichtung zum Erkennen einer Abweichung eines Fahrzeugs (110) von einer Soll-fahrbahn, aufweisend mindestens ein Scheinwerfermodul (118, 120), **dadurch gekennzeichet, dass** das mindestens eine Scheinwerfermodul (118, 120) mindestens eine Halbleiterlichtquelle (132, 134) zur Beleuchtung eines Fahrbahnbereichs mit sichtbarem Licht sowie mindestens ein die mindestens eine Halbleiterlichtquelle (132, 134) kühlendes Kühlelement (146, 148) aufweist, wobei das mindestens eine Scheinwerfermodul (118, 120) weiterhin mindestens eine mit dem mindestens einen Kühlelement (146, 148) thermisch gekoppelte, den beleuchteten Fahrbahnbereich zumindest teilweise erfassende Kamera (150, 152) zur Aufnahme eines Kamerabildes aufweist, wobei die Vorrichtung weiterhin mindestens eine elektronische Auswertungsvorrichtung (158) zur Auswertung des Kamerabildes und zum Erkennen der Abweichung des Fahrzeugs (110) von einer Sollfahrbahn aufweist und die mindestens eine Kamera (150, 152) mindestens eine Matrixkame*ra* und/oder mindestens eine Zeilenkamera aufweist.

2. Vorrichtung gemäß dem vorhergehenden Anspruch, **dadurch gekennzeichnet, dass** die elektronische Auswertungsvorrichtung (158) eine Vorrichtung zur Erkennung von Fahrbahnmarkierungen (114, 116) mittels eines Bilderkennungsalgorithmus aufweist.

3. Vorrichtung gemäß einem der beiden vorhergehenden Ansprüche, **gekennzeichnet durch** mindestens eine Kurvenlichtvorrichtung (164), wobei die mindestens eine Kurvenlichtvorrichtung (164) ausgestaltet ist, um eine Schwenkbewegung der Halbleiterlichtquelle (132, 134) zur Beleuchtung des Fahrbahnbereichs entsprechend einer Veränderung einer Bewegungsrichtung (112) des Fahrzeugs (110) relativ zum Fahrzeug (110) zu steuern, wobei die mindestens eine Kamera (150, 152) schwenkbar mit der Halbleiterlichtquelle (132, 134) gekoppelt ist.

4. Vorrichtung gemäß dem vorhergehenden Anspruch, **dadurch gekennzeichnet, dass** die mindestens eine Kurvenlichtvorrichtung (164) ausgestaltet ist, um durch die mindestens eine elektronische Auswertungsvorrichtung (158) an eine von der elektronischen Auswertungsvorrichtung (158) erkannte Sollfahrbahn angepasst zu werden.

5. Vorrichtung gemäß einem der vorhergehenden Ansprüche, **dadurch gekennzeichnet,**
**dass** das Scheinwerfermodul (118, 120) eine in einem Tiefenschärfebereich der mindestens einen Kamera (150, 152) liegende transparente Abdeckung (128, 130) aufweist und wobei die Vorrichtung weiterhin mindestens eine Regenerkennungsvorrichtung (176) zur Erkennung von Flüssigkeitstropfen auf der transparenten Abdeckung (128, 130) im Kamerabild aufweist.

6. Vorrichtung gemäß einem der vorhergehenden Ansprüche, wobei das Scheinwerfermodul (118, 120) eine transparente Abdeckung (128, 130) aufweist, wobei die transparente Abdeckung (128, 130) ausgestaltet ist, um bei Nässe in Drehung versetzt zu werden.

7. Vorrichtung gemäß einem der vorhergehenden Ansprüche, **dadurch gekennzeichnet, dass** das Scheinwerfermodul (118, 120) zusätzlich mindestens eine zusätzliche Lichtquelle, vorzugsweise eine Halbleiterlichtquelle, vorzugsweise eine infrarote Lichtquelle, aufweist, um mindestens einen Kamerasichtbereich (154, 156) ganz oder teilweise auszuleuchten.

8. Vorrichtung gemäß dem vorhergehenden Anspruch, **dadurch gekennzeichnet, dass** die Intensität und/oder die Ausrichtung der mindestens eine zusätzliche Lichtquelle in Abhängigkeit von einer Fahrzeuggeschwindigkeit stufenweise oder kontinuierlich einstellbar ist.

9. Vorrichtung gemäß einem der vorhergehenden Ansprüche, wobei die Vorrichtung mindestens zwei Scheinwerfermodule (118, 120) aufweist, **dadurch gekennzeichnet, dass** die Vorrichtung zusätzlich ein Anfahrabsicherungssystem (162) aufweist, welches ausgestaltet ist, um eine stereoskopische Objekterkennung im Fahrbahnbereich durchzuführen.

## Claims

1. Device for detecting deviation of a vehicle (110) from a setpoint driving path, having at least one headlight module (118, 120) **characterized in that** the at least one headlight module (118, 120) has at least one semiconductor light source (132, 134) for illuminating a driving path area with visible light and at least one cooling element (146, 148) which cools the at least one semiconductor light source (132, 134), wherein the at least one headlight module (118, 120) also has at least one camera (150, 152) which is then coupled to the at least one cooling element (146, 148), at least partially captures the illuminated driving path area and has the purpose of recording a camera image, wherein the device also has at least one electronic evaluation device (158) for evaluating the camera image and for detecting the deviation of the vehicle (110) from a setpoint driving path, and the at least one camera (150, 152) has at least one matrix camera and/or at least one line scan camera.

2. Device according to the preceding claim, **characterized in that** the electronic evaluation device (158) has a device for detecting driving path markings (114, 116) by means of an image-detection algorithm.

3. Device according to one of the two preceding claims, **characterized by** at least one cornering light device (164), wherein the at least one cornering light device (164) is configured to control a pivoting movement of the semiconductor light source (132, 134) in order to illuminate the driving path area in accordance with a change in a direction of movement (112) of the vehicle (110) relative to the vehicle (110), wherein the at least one camera (150, 152) is coupled in a pivotable fashion to the semiconductor light source (132, 134).

4. Device according to the preceding claim, **characterized in that** the at least one cornering light device (164) is configured to be adapted by the at least one electronic evaluation device (158) to a setpoint driving path which is detected by the electronic evaluation device (158).

5. Device according to one of the preceding claims, **characterized in that** the headlight module (118, 120) has a transparent cover (128, 130) which lies in a depth focus region of the at least one camera (150, 152), and wherein the device also has at least one rain-detection device (176) for detecting droplets of liquid on the transparent cover (128, 130) in the camera image.

6. Device according to one of the preceding claims, wherein the headlight module (118, 120) has a transparent cover (128, 130), wherein the transparent cover (128, 130) is configured to be rotated in the case of wetness.

7. Device according to one of the preceding claims, **characterized in that** the headlight module (118, 120) additionally has at least one additional light source, preferably a semiconductor light source, preferably an infrared light source, in order to illuminate entirely or partially at least one camera viewing area (154, 156).

8. Device according to the preceding claim, **characterized in that** the intensity and/or the orientation of the at least one additional light source can be adjusted incrementally or continuously as a function of a vehicle speed.

9. Device according to one of the preceding claims, wherein the device has at least two headlight modules (118, 120), **characterized in that** the device additionally has a starting safety system (162) which is configured to carry out stereoscopic object detection in the driving path area.

## Revendications

1. Dispositif de détection de l'écart d'un véhicule (110) par rapport à une bande de circulation de consigne, le dispositif présentant au moins un module de phare (118, 120),
**caractérisé en ce que**
le ou les modules de phare (118, 120) présentent au moins une source de lumière (132, 134) à semi-conducteur qui éclaire une partie de la bande de circulation par de la lumière visible ainsi qu'au moins un élément de refroidissement (146, 148) qui refroidit la ou les sources de lumière (132, 134) à semi-conducteur,
le ou les modules de phare (118, 120) présentant en outre au moins une caméra (150, 152) qui est couplée thermiquement à l'élément ou aux éléments de refroidissement (146, 148), qui saisit au moins en partie la partie de la bande de circulation éclairée et qui enregistre une image de caméra,
le dispositif comprenant en outre au moins un dispositif électronique d'évaluation (158) qui évalue l'image de la caméra et qui détecte l'écart du véhicule (110) par rapport à une bande de circulation de consigne et
la ou les caméras (150, 152) présentant au moins une caméra matricielle et/ou au moins une caméra à lignes.

2. Dispositif selon la revendication précédente, **caractérisé en ce que** le dispositif électronique d'évaluation (158) présente un dispositif qui détecte des marquages (114, 116) de la bande de circulation au moyen d'un algorithme de reconnaissance d'image.

3. Dispositif selon l'une des deux revendications qui précèdent, **caractérisé par** au moins un dispositif (164) d'éclairage en virage, le ou les dispositifs d'éclairage en virage (164) étant configurés pour commander un déplacement de pivotement de la source de lumière (132, 134) à semi-conducteur pour qu'elle éclaire la partie de la bande de circulation qui correspond à une modification d'une direction de déplacement (112) du véhicule (110) par rapport au véhicule (110), la ou les caméras (150, 152) étant couplées à pivotement à la source (132, 134) de lumière à semi-conducteur.

4. Dispositif selon la revendication précédente, **caractérisé en ce que** le ou les dispositifs (164) d'éclairage en virage son configurés de manière à être adaptés par le biais du ou des dispositifs électroniques d'évaluation (158) à une bande de circulation de consigne détectée par le dispositif électronique d'évaluation (158).

5. Dispositif selon l'une des revendications qui précèdent, **caractérisé en ce que** le module de phare (118, 120) présente un capot transparent (128, 130) situé dans une zone de profondeur de champ de la ou des caméras (150, 152) et le dispositif présentant en outre au moins un dispositif (176) de détection de pluie qui détecte des gouttes de liquide présentes sur le capot transparent (128, 130) dans l'image de la caméra.

6. Dispositif selon l'une des revendications qui précèdent, dans lequel le module de phare (118, 120) présente un capot transparent (128, 130), le capot transparent (128, 130) étant configuré pour être mis en rotation lorsqu'il est mouillé.

7. Dispositif selon l'une des revendications qui précèdent, **caractérisé en ce que** le module de phare (118, 120) présente de plus au moins une source supplémentaire de lumière, de préférence une source de lumière à semi-conducteur et de préférence une source de lumière infrarouge, pour éclairer totalement ou partiellement au moins une plage visible (154, 156) de la caméra.

8. Dispositif selon l'une des revendications qui précèdent, **caractérisé en ce que** l'intensité et/ou l'orientation de la ou des sources de lumière supplémentaires peuvent être réglées par paliers ou en continu en fonction de la vitesse du véhicule.

9. Dispositif selon l'une des revendications qui précèdent, le dispositif présentant au moins deux modules de phare (118, 120), **caractérisé en ce que** le dispositif présente en outre un système (162) de blocage du démarrage configuré pour exécuter une reconnaissance stéréoscopique d'objets présents dans la partie de la bande de circulation.
